Europäisches Patentamt

European Patent Office

Office européen des brevets

(19)

(11) Publication number : **0 427 342 B1**

(12) **EUROPEAN PATENT SPECIFICATION**

(45) Date of publication of patent specification :
**14.06.95 Bulletin 95/24**

(51) Int. Cl.⁶ : **G08B 26/00,** G08B 25/00,
H04L 12/06

(21) Application number : **90202929.7**

(22) Date of filing : **06.11.90**

(54) **Transmission system.**

(30) Priority : **10.11.89 SE 8903775**

(43) Date of publication of application :
**15.05.91 Bulletin 91/20**

(45) Publication of the grant of the patent :
**14.06.95 Bulletin 95/24**

(84) Designated Contracting States :
**DE FR GB IT SE**

(56) References cited :
**AU-B- 3 278 278**
**AU-B- 5 124 979**

(73) Proprietor : **Philips Electronics N.V.**
**Groenewoudseweg 1**
**NL-5621 BA Eindhoven (NL)**
(84) **DE FR GB IT**
Proprietor : **Philips Norden AB**
**Tegeluddsvägen 1**
**S-11584 Stockholm (SE)**
(84) **SE**

(72) Inventor : **Johansson, Stig Rune**
**c/o INT. OCTROOIBUREAU B.V.**
**Prof. Holstlaan 6**
**NL-5656 AA Eindhoven (NL)**

(74) Representative : **Bakker, Hendrik et al**
**INTERNATIONAAL OCTROOIBUREAU B.V.,**
**Prof. Holstlaan 6**
**NL-5656 AA Eindhoven (NL)**

# Description

## Field of the invention

The invention relates to a transmission system comprising an interrogator and a number of transponders, the transponders of which by means of individual addressing may communicate with the interrogator for reading and/or writing of information in the transponders even when more than one transponder is within the read/write zone of the interrogator.

## Background of the invention

Transmission systems according to the above are used in many situations when some kind of identification is desired. Escort memory systems in material handling and production, container and vehicle identification, identification of objects when sorting etc may be mentioned as examples. Another example is personal identification, for example, with the aim to only give persons with authority admittance to a department having restrictions in the right to enter and at the same time to obtain a registration of everyone entering.

Some of todays transmission systems operate in such a way that the interrogator activates the transponder which due to that starts transmitting information to the interrogator. If there are a more than one transponder within the read/write zone of the interrogator, that is within the range for reading and writing, respectively, problems arise. One possible situation is that the signal from one of the transponders dominates over the other and the interrogator may during favorable circumstances interpret the dominating signal. Informations from the rest of the transponders fail to appear. Another possible course is that the transponders within the read/write zone of the interrogator disturb each other, so that no reading may be done and according to that the information from all of the transponders within the read/write zone fail to appear.

A solution giving a certain approvement of the information transmission and in accordance with the opening paragraph of the specification is to give the transponders individual addresses and selectively address the transponders. The number of addresses must be limited so that the successive addressing of the transponders do not last to long. In systems with many transponders more than one transponder must be applied the same address. There is a risk that more than one transponder having the same address will be present in the read/write zone of the interrogator, which similar to the situation described above with more than one transponder within the read/write zone of the interrogator results in that information from some transponders fail to appear.

## Summary of the invention

It is an object of the present invention to obtain a transmission system which in a reliable and and in rapid way may take care of a very great number of transponders and even in the case when more than one transponder at the same time are within the read/write zone of the interrogator.

The object of the invention is obtained by means of a transmission system charactarized in that for addressing of a transponder the transmitter/receiver unit of the interrogator is arranged to transmit a start code, transponders within the read/write zone are arranged to transmit a reply code having a time delay dependent on the address of the transponder via the transmitter/receiver unit as a reply to a detected start code, the interrogator in dependence on the measured time delay of received reply codes is arranged to determine the addresses for within the read/write zone replying transponders, whereupon when a transponder in question has been addressed information transmission may take place between the addressed transponder and the interrogator. By using a start code and time delayed reply codes information is rapidly obtained about which addresses the transponders within the read/write zone have. It is then sufficient to individually address these transponders for information transmission between the addressed transponders and the interrogator.

It is desirable that the time delay between the individual time delayed reply codes is as small as possible to make the transmission system work rapidly. However, this may result in that the interrogator receives new reply codes before the complete preceeding code has been received. Such a situation arises in the case that the time delay between two reply codes replying to the start code is less than or equal with the duration of the reply codes. The duration is to an essential extent dependent on the character length of the reply code. In the discussion above no attention is payed to time delays caused by the distances between the interrogator and the transponders due to the fact that these time delays may be negligated in comparance with the mutual time delays of the reply codes in the applications at hand for the transmission system in question.

According to a favorable embodiment of the invention it is prevented that any in the interrogator colliding reply codes has the consequence that the reply from one or more transponders fail to appear. The favorable embodiment is characterized in that the interrogator is arranged to determine the addresses of the transponders in dependence on measured time delay of the received reply codes and the measured continous length of the received reply codes, and that the interrogator from the measured continous length of the received reply codes determines the magnitude of the address regions within which the address for replying transponders is located and by use of the measured time delay determines the addresses included within the respective address regions, whereupon the transponders with the addresses included within the respective address regions are addressed for information transmission. In the case of colliding reply codes all transponders are successively addressed which might transmit a reply code during the collision and it is prevented that anyone of the transponders is omitted. Addressed transponders within an address region not corresponding to the addressing are considered as transponders not within the read/write zone of the interrogator.

The transmission system according to the invention is very suitable for personal identification and sorting, but gives advantages in all applications in which a number of transponders may be reached from the interrogator. In the case of personal identification it is often concerned with a great number of persons and it is essential that all are registrated. The fact that several persons may arrive at the check point in groups is no obstacle because the transmission system may handle several transponders within the read/write zone of the interrogator.

## Brief description of the drawings

The invention will below be described in more detail with reference to the accompanying drawings, in which
Figure 1 shows a transmission system according to the invention,
Figure 2 in more detail shows a possible embodiment of the detector means included in the transmission system according to Figure 1, and
Figure 3 shows a time diagram for an interrogator, Figure 3a, and for five different transponders, Figure 3b-3f, i cooperation.

## Description of a preferred embodiment of a transmission system

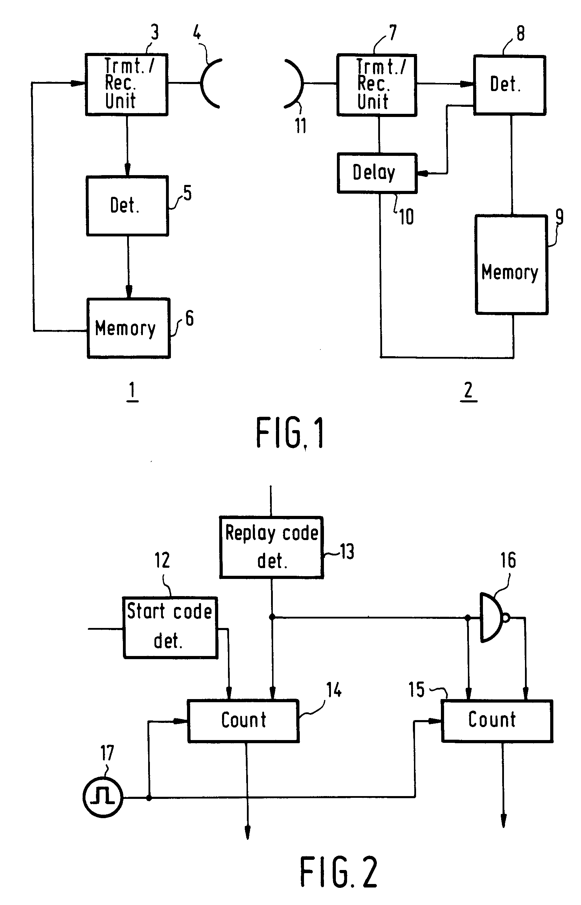

Figure 1 shows a transmission system. In the system an interrogator 1 and a number of transponders, of which one transponder 2 is shown , are included. The interrogator 1 comprises a transmitter/receiver unit 3 for transmitting and/or receiving information of different kinds, such as codes, addresses and information messages. The information is modulated in a suitable known way and this will not be described in more detail here since it is the general knowledge of a person skilled in the art. The interrogator 1 comprises furthermore a transmitter/receiver antenna 4, detector means 5 and memory means 6. The shown transponder 2 comprises a transmitter/receiver unit 7, detector means 8, memory means 9, delay means 10 and an antenna 11.

In the transmission system each transponder is assigned a unique address in the interval 0 to n, in which n is number of transponders in the system or a greater number. The communication between the interrogator 1 and the transponders is started by a transmission of a start code from the interrrogator. In the shown embodiment the start code is stored in the memory means 6 from which it is fetched for transmitting on the antenna 4 in by means of the transmitter/receiver unit 3 modulated shape. A transponder 2 within the read/write zone of the interrogator receives the start code transmitted by the interrogator 1 on its antenna 11. When the detector means 8 detect the received start code a process is started in the transponder to transmit a reply code. According to the shown embodiment the reply code is fetched from the memory means 9 in order to then be delayed in a delay means 10 to an extent dependent on the address assigned to the transponder. Furthermore an additional fixed delay may be introduced. The delayed reply code is transmitted on the antenna 11 with assistance from the transmitter/receiver unit 7. Reply codes transmitted by the transponders are detected by the interrogator which in the detector means 5 determines the reply time delay, that is the elapsed time from the transmitting of a start code to a receiving of a reply code in the interrogator, and the reply length, that is the length of the received reply. When having information about the reply time delay it is possible to obtain information about the address to the transponder transmitting a reply code from the memory means. From the reply length information is obtained if there are more than one colliding reply code or a separate reply code in question. When the reply codes are colliding, the reply length furthermore indicates the magnitude of the address region belonging to the reply codes. It is assured that the interrogator knows the reply length of the transmitted reply codes and a reply having a higher length accordingly indicates that two or severel reply codes are colliding. In the memory means it is indicated in which address region collisions are present. When the reply time has elapsed for all possible in the transmission system possible addresses, the interrogator starts to address the transponders. For an unambiguously received reply code, that is non-colliding reply codes, the address for replying transponders is fetched directly from the memory means 6 for transmission. When the transponder has been addressed the rest of the informaton transmission may take place between the addressed transponder sand the interrogator. For address regions with colliding reply codes, the interrogator addresses each address within the address region. The addresses may, as in the case of non-colliding reply codes, be fetched from the memory means. A reply from an addressed transponder failed to appear is interpreted in such a way that no transponder with that address is present within the read/write zone of the interrogator. Commonly there are quite a few not replying addresses and the total addressing time is thereby hardly affected. The successive addressing of the transponders carrried out by means of the transmission system, results in establishing of a nondisturbed communication with each transponder within the read/write zone of the interrogator. In the transmission system a great number of transponders may be given individual addresses at the same time as the communication time will be reasonably low and dependent on the number of transponders in the system and within the read/write zone.

The detector means 5 according to Figure 1 will now be described with reference to Figure 2. In the detector means 5 a start code detector 12 is included detecting when a start code fetched from the memory means is transmitted by the transmitter/receiver unit. The start code detector 12 starts a counter 14 when the start code is transmitted. The counter is advanced by a pulse generator 17. A reply code detector 13 detects the reply codes emitted by the transponders and causes a reading of the counter 14 when detecting these reply codes. With the value read from the counter 14 as an input signal to the memory means 6 the address of the transponder in question is obtained from these memory means. The reply code detector also starts a counter 15, which likewise is advanced by the pulse generator 17. The counter 15 is stopped, read and reset when the reply code detector 13 does not detect any reply code transmission anymore by means of an inverter 16 coupled between the reply code detector 13 and the counter 15. The counter result stated by the counter 15 contains information about the magnitude of the address region within which the transponders replying to the reply code are situated and the counter result is used to indicate the number of consecutive reply station addresses to be fetched in the memory means 6 for transmitting.

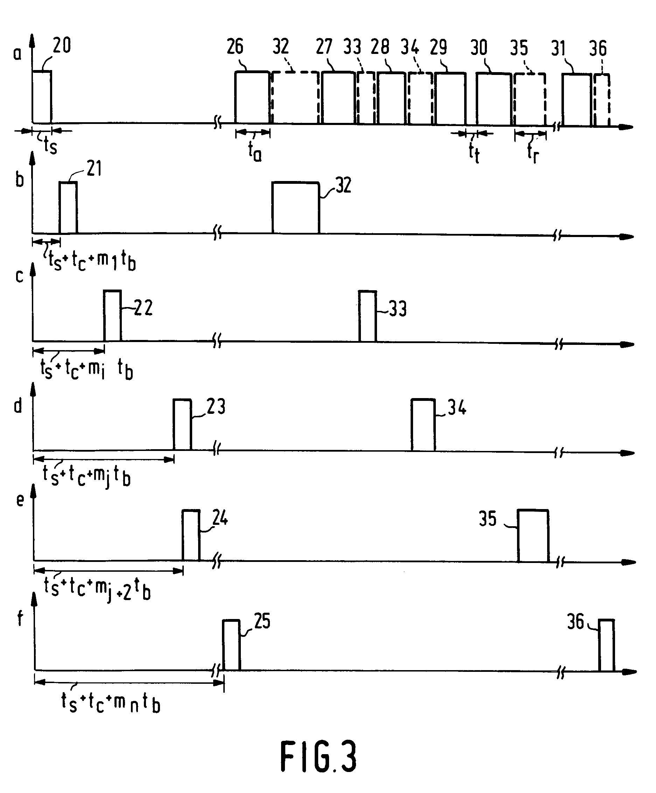

In Figure 3 a time diagram is shown for an interrogator, Figure 3a, and for five different transponders, Figure 3b-3f. In the example to be discribed it has been assumed that these five transmitters and no other are within the read/write zone of the interrogator at the described moment. The five transponders are in the following denoted with 2b-2f in correspondance with the letter notation in the respective figures. At the point of time 0 the interrogator transmits a start code 20 with a duration $t_s$. The transponder 2b replies to the start code 20 by generating an address dependent reply code 21. The reply code is transmitted with a time delay $t_1 = t_c + m_1 t_b$, in which $t_c$ is a fixed delay, $m_1$ is the adress for the transponder 2b and $t_b$ is the time to count up the reply time delay one step and may be the time to tranfer a data or address bit in the system. The reply station 2c replies to the start code by transmitting an address dependent reply code 22 which is delayed $t_i = t_c + m_i t_b$, in which $m_i$ is the address for the transponder 2c. The transponder 2d replies to the start code by the transmitting an address dependent reply code 23 which is delayed $t_j = t_c + m_j t_b$, in which $m_j$ is the adress for the transmitter 2d. The transmitter 2e replies to the start code by transmitting an address dependent reply code 24 which is delayed $t_{j+2} = t_c + m_{j+2} t_b$, in which $l_{j+2}$ is the address for the transponder 2e. The transponder 2f replies to the start code 20 by transmitting an address dependent reply code 25 which is delayed $t_n = t_c + m_n t_b$, in which $m_n$ is the adress for the transponder 2f. From the shown time diagrams it is apparent that the reply codes 23 and 24 collide while the rest of the reply codes unambiguously may be used for determining of the respective addresses of the transponders. The reply stations 2d and 2e with colliding reply codes 23 and 24 are regarded to belong to the same address region. When the reply time for all transponders has elapsed, that is when the transponder with the address $m_n$ has had opportunity to transmit its reply code, the interrogator starts to address the transponders having transmitted reply codes. A first addressing 26 having a duration $t_a$ addresses the transponder 2b. The addressing is followed by an information transmission 32 between the transponder 2b and the interrogator. A second addressing 27 starts an information transmission 33 between the transponder 2c and the interrogator. A third addressing 28 starts an information transmission 34 between the transponder 2d and the interrogator. A fourth addressing 29 does not start any information transmission. The transponder addressed is not situated within the read/write zone of the interrogator, but belongs to an address region common to the tranponders 2d and 2e. A fifth addressing 30 starts information transmission 35 between the transponder 2e and the interrogator. A sixth addressing 31 starts information transmission 36 between the transponder 2f and the interrogator. In the shown time diagrams the duration $t_r$ for the information transmission between the transponder and the interrogator is determined by the amount of information to be transferred. For the numerical example shown below $t_r$ however has been assumed to be a constant, which does not influence the principle discussion and furthermore is a common situation.

Example

In a transmission system with only one transponder within the write/read zone of the interrogator the communication time $t_k$ is essentially determined by the following expression:

$$T_k = t_s + t_c + n t_b + t_a + t_r + t_{k1}$$

in which in accordance with the above

$t_s$ is the duration of the start code,

$t_c$ is a fixed delay of the reply codes of the transponder,

n is the number of addresses used in the system,

$t_b$ is the duration to count up the reply time delay with one step and may be the duration of the transmission of a data or addressbit in the system,

$t_a$ is the duration for an address code,

$t_r$ is the duration for the information transmission between the transponder and the interrogator,

$t_{k1}$ is the time consumed for calculations in the interrogator and the transponder.

The following approximate values may be valid in a realistic numerical example.

$t_s$ = 0.16 ms (2 bytes)

$t_c$ = 0 ms

n = 1 000

$t_b$ = 0.01 ms

$t_a$ = 0.16 ms (2 bytes)

$t_r$ = 2.56 ms (reading 32 bytes)

$t_{k1}$ = 0 ms

With the stated values $T_k$ = 12.88 ms is obtained. In the case of two transponders with addresses close to each other within the read/write zone the magnitude of the address region needed to be scanned must be determined. In the above exemplified case this is the address region $m_j$ to $m_{j+2}$ and accordingly the following amount of time is added to the communication time for information transmission between the transponders and the interrogator:

$$t_a + t_t + t_a + t_r$$

in which $t_t$ is the time the interrogator awaits a reply from the addressed transponder before it transmits a new address. If $t_t$ is 0.25 ms the following addition of time consuming is obtained:

0.16 + 0.25 + 0.16 + 2.56 = 3.13 ms

Accordingly the total time consuming is 12.88 + 3.13 ≈ 16 ms, that is 8 ms for each transponder which is quite acceptable values for the mentioned application fields. It is particularly to be noted that the average time consuming for each transponder or batch decreases when communicating with an increasing number of transponders within the read/write zone.

**Claims**

1. A transmission system comprising an interrogator (1) and a number of transponders (2), the transponders of which by means of individual addressing may communicate with the interrogator, when being in a read/write zone thereof, for reading and/or writing of information into and/or from the transponders even when more than one transponder is within the read/write zone of the interrogate, **characterized** in that for addressing of a transponder the transmitter/receiver unit (3) of the interrogator is arranged to transmit a start code, transponders within the read/write zone by means of the transmitter/receiver unit (7) are arranged to transmit a reply code having a time delay dependent on the address of the transponder as a reply to a detected start code, the interrogator in dependence on the measured time delay of the received reply codes is arranged to determine the addresses for within the read/write zone replying transponders, whereupon when a transponder in question has been addressed information transmission may take place between the addressed transponder and the interrogator.

2. A transmission system as claimed in claim 1, **characterized** in that the interrogator is arranged to determine the addresses of the transponders in dependence on the measured time delay of received reply codes and the measured continuous length of the received reply codes, and that the interrogator from the measured continuous length of the received reply codes determines the magnitude of the address regions within which the address for replying transponders is located and by use of the measured time delay determines the addresses included within the respective address region, whereupon the transponders with the addresses included within the respective address regions are addressed for information transmission.

**Patentansprüche**

1. Übertragungssystem mit einem Abfragegerät (1) und einer Anzahl Antwortgeräte (2), wobei die Antwortgeräte durch individuelle Adressierung mit dem Abfrageferät kommunizieren können, wenn sie sich in einer Lese-/Schreibzone desselben befinden, um Information aus den Antwortgeräten auszulesen und/oder Information in die Antwortgeräte einzuschreiben, sogar wenn mehr als nur ein Antwortgerät in der Lese/Schreibzone des Abfragegeräts liegt, dadurch gekennzeichnet, daß zum Adressieren eines Antwortgerätes die Sender/Empfängereinheit (3) des Abfragegerätes dazu vorgesehen ist, einen Startcode zu übertragen, daß die Antwortgeräte innerhalb der Lese/Schreibzone dazu vorgesehen sind, einen Antwortcode zu übertragen mit einer Zeitverzögerung, die von der Adresse des Antwortgerätes abhängig ist über die Sende/Empfangseinheit (7) als Antwort auf einen detektierten Startcode, daß das Abfragegerät abhängig von der gemessenen Verzögerungszeit der empfangen Antwortcodes dazu vorgesehen ist, die Adressen der innerhalb der Lese/Schreibzone antwortenden Antwortgeräte zu bestimmen, wonach, wenn ein betreffendes Antwortgerät adressiert worden ist, zwischen dem adressierten Antwortgerät und dem Abfragegerät eine informationsübertragung stattfinden kann.

2. Übertragungssystem nach Anspruch 1, dadurch gekennzeichnet, daß das Abfragegerät die Adressen der Antwortgeräte bestimmt und zwar in Abhängigkeit von der gemessenen Zeitverzögerung der empfangenen Antwortcodes und der gemessenen kontinuierlichen Länge der empfangenen Antwortcodes und daß das Abfragegerät aus der gemessenen kontinuierlichen Länge der empfangenen Antwortcodes die Größe der Adreßgebiete bestimmt, in denen die Adresse für die antwortenden Antwortgeräte liegt und durch Verwendung der gemessenen Zeitverzögerung die Adressen in den betreffenden Adreßgebieten bestimmt, wonach die Antwortgeräte mit den Adressen in den betreffenden Adreßgebieten für infőrmationsübertragung adressiert werden.

**Revendications**

1. Système de transmission comprenant un interrogateur (1) et un certain nombre de répondeurs (2), les répondeurs pouvant communiquer via un adressage individuel avec l'interrogateur, lorsqu'ils se trouvent dans une zone de lecture/écriture de celui-ci, pour lire et/ou écrire des informations dans les répondeurs et depuis ceux-ci, même lorsqu'il y a plus d'un répondeur dans la zone de lecture/écriture de l'interrogateur, caractérisé en ce que, pour adresser un répondeur, l'unité d'émission/réception (3) de l'interrogateur est agencée pour transmettre un code de départ, les répondeurs à l'intérieur de la zone de lecture/écriture sont agencés pour transmettre un code de réponse ayant un retard qui dépend de l'adresse du répondeur, via l'unité d'émission/réception (7) en réponse à un code de départ détecté, l'interrogateur est agencé, en fonction du retard mesuré des codes de réponse reçus, pour déterminer les adresses des répondeurs qui répondent dans la zone de lecture/écriture, après quoi, lorsqu'un de ces répondeurs a été adressé, la transmission d'informations peut avoir lieu entre le répondeur adressé et l'interrogateur.

2. Système de transmission selon la revendication 1, caractérisé en ce que l'interrogateur est agencé pour déterminer les adresses des répondeurs en fonction du retard mesuré des codes de réponse reçus et de la longueur continue mesurée des codes de réponse reçus et en ce que l'interrogateur détermine à partir de la longueur continue mesurée des codes de réponse reçus l'ordre de grandeur des régions d'adresses à l'intérieur desquelles l'adresse pour les répondeurs de réponse est située et en utilisant le retard mesuré, il détermine les adresses incluses à l'intérieur des régions d'adresses respectives, après quoi les répondeurs avec les adresses incluses à l'intérieur des régions d'adresses respectives sont adressés pour une transmission des informations.

FIG. 1

FIG. 2

FIG.3